# EUROPÄISCHE PATENTANMELDUNG

(11) **EP 0 549 928 A1**
(43) Veröffentlichungstag der Anmeldung: **07.07.1993**
(21) Anmeldenummer: 92120955.7
(22) Anmeldetag: 09.12.1992
(51) Int. Cl.: B29C 45/17, B29C 33/30

(54) **Gussmaschine, insbesondere Spritzgussmaschine**

(30) Priorität: 17.12.1991 DE 4141541
(71) Anmelder: Hofmann, Konrad, D-90766 Fürth (DE)
(72) Erfinder: Hofmann, Konrad, D-90766 Fürth (DE)
(74) Vertreter: Rau, Manfred, Dr. Dipl.-Ing.

(57) **Zusammenfassung**

Bei einer Gußmaschine, insbesondere Spritzgußmaschine 1 umfassend einen Formraum zur Aufnahme eines Spritzform und wenigstens einen hydraulischen Schließzylinder 17, 18 zum Festlegen der Spritzform in dem Formraum sowie Einrichtungen zum Verändern der Größe des Formraumes in Form von axial in Wirkungsrichtung des Schließzylinders 17, 18 verfahrbaren, senkrecht zu diesem angeordneten Formraumbegrenzungsplatten 12, 19, 20, wobei zur kostenoptimalen und schnellen Herstellung von Prototypen in Prototypenformen wenigstens zwei, vorzugsweise drei senkrecht zueinander jeweils auf eine Formraumbegrenzungsplatte 12, 19, 20 einwirkende hydraulische Schließzylinder 17, 18 vorgesehen sind.

## Beschreibung

Die Erfindung richtet sich auf eine Gußmaschine, insbesondere eine Spritzgußmaschine umfassend einen Formraum zur Aufnahme einer Spritzform und wenigstens einen hydraulischen Schließzylinder zum Festlegen der Spritzform in dem Formraum sowie Einrichtungen zum Verändern der Größe des Formraumes in Form wenigstens einer in Wirkungsrichtung des Schließzylinders verfahrbaren, senkrecht zu diesem angeordneten Formraumbegrenzungsplatte.

In herkömmlichen derartigen Spritzgußmaschinen wird eine Spritzform aus Metall in den Formraum eingebracht. Es wird dann der Formraum mit Hilfe des Schließzylinders geschlossen, wobei durch das Vorsehen von Keilflächen erreicht wird, daß die Schließkräfte auch von der Seite her auf die Form einwirken. Danach kann in die Form Kunststoff unter hohem Druck eingespritzt werden, wobei ein zuverlässiger mechanischer Zusammenhalt gegen den durch den eingespritzten Kunststoff aufgebauten Druck gewährleistet ist.

Zur serienmäßigen Herstellung von Spritzgießteilen ist es wichtig, daß das Spritzen und das anschließende Entformen in einem möglichst kurzen Zeittakt erfolgt. Dementsprechend sind derartige Spritzgußformen, insbesondere bei komplizierter geformten Gußteilen mit Hinterschneidungen und Hohlräumen, aufwendig ausgestaltet und weisen bei der Entformung automatisch arbeitende Auswerfer und automatisch ein- und ausfahrbare Formkerne auf. Die Erstellung einer solchen Gußform ist dementsprechend mit einem ganz erheblichen Kostenaufwand verbunden.

In vielen Anwendungsfällen ist es aber erforderlich, zunächst sogenannte Prototypen zu erstellen, d.h. aus dem später verwendeten Kunststoff gespritzte Vorserienteile, die dazu verwendet werden können, in wirklichkeitsnahen und praxisgerechten Tests eingesetzt und beurteilt zu werden, und welche erforderlichenfalls auch in Abhängigkeit von solchen Erprobungen nochmals geändert werden.

Würde für derartige Prototypen bereits eine Gußform hergestellt, wie sie zur späteren Serienfertigung geeignet ist, wäre der Kostenaufwand erheblich und natürlich auch der Zeitaufwand, bis die ersten gespritzten Produkte zur Erprobung zur Verfügung stehen, da eine für die Serienfertigung geeignete Form naturgemäß auch eine erheblich längere Herstellungsdauer beansprucht.

Andererseits ist zu berücksichtigen, daß bei der Herstellung von derartigen Prototypen andere Rahmenbedingungen insoweit herrschen, als ja jeweils nur eine relativ geringe Stückzahl, wie sie für die Erprobung erforderlich ist, benötigt wird. Dementsprechend spielt der Zeittakt bei der Fertigung nur eine äußerst untergeordnete Rolle und es kann in Kauf genommen werden, daß der Entformungsvorgang unter Verzicht auf automatisch verfahrbare Auswerfer, Formkerne und dergleichen weitgehend manuell erfolgt. Dies ermöglicht an sich die Herstellung von kostengünstigeren Prototypenformen. Da diese Formen andererseits für die spätere Serienfertigung nicht eingesetzt werden, kommt es für deren Rentabilität wesentlich darauf an, sie möglichst kostengünstig realisieren zu können.

Neben anderen Verfahren zur Herstellung von Prototypen, wie dem sogenannten Galvano-Hartnickel-Verfahren und der Verwendung von Formen aus Feinzink-Legierungen sowie dem Metallspritzen ist es insoweit aus der Zeitschrift "Plastics Engineering", Mai 1982, S. 61, bereits bekannt, einen rotationssymmetrischen und als Form dienenden Körper in einem mit Kühleinrichtungen versehenen quaderförmigen Körper aufzunehmen. Bei einer Änderung des Formlings ist somit jeweils nur der kleinere, rotationssymmetrische Körper zu ändern bzw. auszutauschen, wodurch sich der damit verbundene Aufwand erheblich verringert.

Aus dem Buch von Menges/Mohren "Anleitung für den Bau von Spritzgießwerkzeugen", 2 Auflage, S. 346 (Hanser Verlag, München/Wien) ist es weiterhin bekannt, mit sogenannten Baukastenelementen zu arbeiten. Dabei sind jedoch ein Auswerferkasten, ein Führungsbolzen, eine Zentrierung und ein positionsmäßig fester Anguß erforderlich.

Ein weiteres, an sich bereits sehr effektives Rationalisierungskonzept ist der 36 26 019 C1 bekannt. Dort wird eine Vorrichtung zur Herstellung von Prototypen und Kleinserienteilen beschrieben, bei welcher die Form ein Standard-Volumen entsprechend dem Formraum-Volumen marktgängiger Spritzgußmaschinen-Klassen aufweist. Dabei ist vorgesehen, daß dieses Standard-Volumen in ein Raster aus Standard-Teilvolumina aufgeteilt und die gesamte Form aus einer Vielzahl von Körpern aufgebaut ist, die ein derartiges Standard-Teilvolumen oder ein Vielfaches davon darstellen, wobei die Gesamtzahl der einzelnen Körper in einer Zuhaltung und einem aus mehreren Backen bestehenden Formrahmen halterbar sind und mindestens zwei Backen in geringem Umfang radial verfahrbar sind.

Hiervon ausgehend liegt der Erfindung die Aufgabe zugrunde, eine Gußmaschine, insbesondere eine Spritzgußmaschine als solche so auszugestalten, daß die Notwendigkeit der Anpassung der Prototypenform an ein Standard-Volumen entfällt und die Prototypenform dementsprechend einfacher, schneller und kostengünstiger realisiert werden kann.

Zur Lösung dieser Aufgabe ist erfindungsgemäß vorgesehen, daß bei einer derartigen Gußmaschine zur Herstellung von Prototypen in Prototypenformen insgesamt wenigstens zwei, vorzugsweise drei senkrecht zueinander jeweils auf eine Formraumbegrenzungsplatte einwirkende hydraulische Schließzylinder vorgesehen sind.

Hierdurch ist es möglich, die Größe des Formraumes an die tatsächlich im Einzelfall benötigte Formgröße, d.h. an die Größe des zu erstellenden Spritzteils anzupassen. Insbesondere trägt diese Ausgestaltung auch dem Umstand Rechnung, daß erfahrungsgemäß der größte Teil der als Prototypen zu erstellenden Spritzgußteile eine Form aufweist, welche auf irgendeine Weise langgestreckt ist, so daß es stets eine Richtung gibt, in welcher geringere Formzuhaltekräfte erforderlich sind als bei einer anderen Richtung. Dementsprechend kann z.B. vorgesehen sein, daß der oder die zusätzlichen Schließzylinder gegenüber dem an sich bekannten HauptSchließzylinder bei bisher üblichen Spritzgußmaschinen schwächer dimensioniert werden.

Im Rahmen der Erfindung ist vorgesehen, daß die hydraulischen Schließzylinder endlagenstabil ausgebildet sind. Insoweit sind hydraulische Schließzylinderanordnungen bekannt, welche in der Endlage einen besonders hohen Verstellwiderstand gegen auftretende Kräfte aufweisen, wie dies bei geschlossenem Formraum beim Einspritzen des Kunststoffes der Fall ist.

Ein ganz wesentlicher Vorteil einer erfindungsgemäßen Spritzgußmaschine besteht aber nicht nur darin, daß die Formraumgröße individuell dem zu erstellenden Formstück angepaßt werden kann, sondern auch darin, daß eine sehr problemlose Entformung dadurch realisiert werden kann, daß der Druck auf die Schließzylinder reduziert wird bzw. daß diese zurückgefahren werden.

In weiterer Ausgestaltung der Erfindung ist vorgesehen, daß die Formraumbegrenzungsplatten auswechselbar an den Schließzylindern befestigt sind. Es ist dementsprechend möglich, bei relativ kleinen Formen dafür zu sorgen, daß die Formraumplatten sich beim Zusammenfahren der Schließzylinder nicht schon vor Erreichen der Formwand gegenseitig behindern. Andererseits kann bei größeren Formen ein vollflächiges Anliegen der Formraumbegrenzungsplatten an den Außenwänden der Form erreicht werden.

Im Rahmen der Erfindung ist es weiterhin möglich, die Anspritzkanäle, welche bei Serienformen an sich Teil der Form selbst sind, in den Formraumbegrenzungsplatten auszubilden. Bei manchen Spritzvorgängen zeigt sich erst bei der ersten Probespritzung, daß die Wahl des Anspritzpunktes bzw. der Anspritzpunkte unglücklich getroffen wurde, so daß die Form bei Spritzvorgang nicht vollständig oder nicht zufriedenstellend ausgefüllt wird. Durch Führung der Anspritzkanäle in den Formraumbegrenzungsplatten ist es auf verhältnismäßig einfache und billige Weise möglich, erforderlichenfalls den Anspritzpunkt zu verlegen.

Um eine exakte Parallelführung der Formraumbegrenzungsplatten realisieren zu können, kann weiterhin vorgesehen sein, daß diese über Führungszapfen seitlich des Stellzylinders geführt sind.

Nachfolgend wird die Erfindung anhand eines bevorzugten Ausführungsbeispieles in Verbindung mit der Zeichnung näher beschrieben. Dabei zeigen
- Fig. 1: einen vertikalen Längsschnitt durch eine erfindungsgemäße Spritzgußmaschine und
- Fig. 2: einen Schnitt längs der Linie II-II in Fig. 1.

Bei der in der Zeichnung dargestellten Spritzgußmaschine wurden die an sich bekannten konstruktiven Detaillösungen von Spritzgußmaschinen, z.B. die Hydraulik der Schließzylinder usw. aus Gründen der Einfachheit und Übersichtlichkeit weggelassen.

Bei der in der Zeichnung dargestellten erfindungsgemäßen Spritzgußmaschine 1 ist ein bei herkömmlichen Spritzgußmaschinen als solches bekanntes Grundgestell 2 auf einem Fußgestell 3 angeordnet.

Von der horizontalen Grundplatte 4 des Grundgestells 2 erstrecken sich zwei zueinander parallele, vertikale Lagerplatten 5, 6 weg.

An der Lagerplatte 5 ist das Gehäuse 7 eines hydraulisch betätigten Schließzylinders 8 bei 9 angeschraubt, wobei das Gehäuse der hydraulischen Betätigungseinrichtung 10 über Schrauben 11 angebracht ist. Einzelheiten der Hydraulik sind nicht dargestellt.

Eine erste Formraumbegrenzungsplatte 12 ist mittels des Hydraulikzylinders 8 längs Führungsbolzen 13 verschiebbar, welche in den Lagerplatten 5, 6 sich parallel zueinander zwischen diesen erstreckend gelagert sind.

An der zweiten vertikalen Lagerplatte 6 ist eine Formraumbegrenzungsplatte 15 zur Angußführung angebracht. Weiterhin ist ein an sich bekanntes Einspritzaggregat 16 mit Spritzdüse dargestellt.

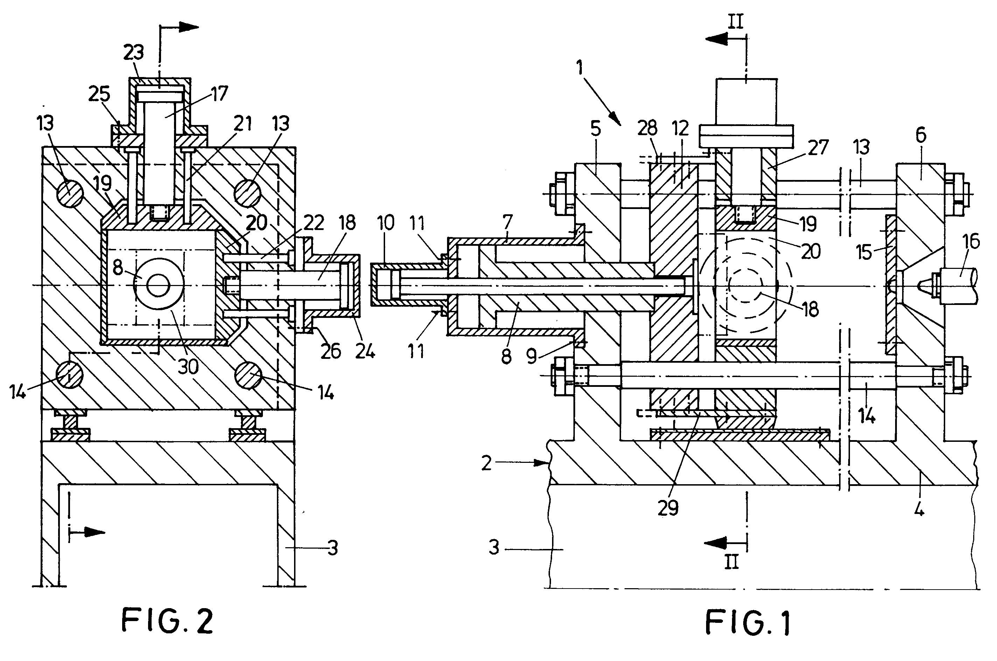

Wie aus Fig. 2 ersichtlich ist, sind neben dem ersten hydraulischen Schließzylinder 8 noch zwei weitere hydraulische Schließzylinder 17, 18 vorgesehen, welche auf Formraumbegrenzungsplatten 19 bzw. 20 einwirken. Die Betätigungsrichtungen der Schließzylinder 8, 17 und 18 stehen nach Art eines Koordinatenkreuzes aufeinander senkrecht. Zur Führung der Formraumbegrenzungsplatten 19, 20 sind Führungsstangen 21, 22 vorgesehen. Die Hydraulikzylinder 17, 18 sind in Gehäusen 23, 24 untergebracht, welche über Schrauben 25, 26 an einem Tragegestell 27 angeschraubt sind (vgl. Fig. 1), welches, wie bei 28, 29 schematisch angedeutet, mit der Formraumbegrenzungsplatte 12 längs der Führungszapfen 13, 14 längsverschiebbar verbunden sein kann.

Aus der vorstehenden Beschreibung wird deutlich, daß es die erfindungsgemäße Ausgestaltung der Spritzgußmaschine möglich macht, mit Hilfe der Formraumbegrenzungsplatten 12, 19, 20 einen Formraum einzustellen und endlagenstabil zu begrenzen, der exakt an dem Platzbedarf für den jeweiligen Formling angepaßt werden kann, so daß der Aufwand für die Formherstellung wesentlich reduziert werden kann. Darüber hinaus ermöglicht es die hydraulische Betätigung der Schließzylinder 17, 18, den Formraum zum Entformen zu öffnen, so daß auch insoweit die Form sehr einfach ausgestaltet werden kann.

## Patentansprüche

1. Gußmaschine, insbesondere Spritzgußmaschine umfassend einen Formraum zur Aufnahme einer Spritzform und wenigstens einen hydraulischen Schließzylinder zum Festlegen der Spritzform in dem Formraum sowie Einrichtungen zum Verändern der Größe des Formraumes in Form von wenigstens einer axial in Wirkungsrichtung des Schließzylinders verfahrbaren, senkrecht zu diesem angeordneten Formraumbegrenzungsplatte, dadurch gekennzeichnet, daß zur Herstellung von Prototypen in Prototypenformen wenigstens zwei, vorzugsweise drei senkrecht zueinander jeweils auf eine Formraumbegrenzungsplatte (12, 19, 20) einwirkende hydraulische Schließzylinder (8, 17, 18) vorgesehen sind.

2. Gußmaschine nach Anspruch 1, dadurch gekennzeichnet, daß die hydraulischen Schließzylinder (8, 17, 18) endlagenstabil ausgebildet sind.

3. Gußmaschine nach Anspruch 1, dadurch gekennzeichnet, daß die Formraumbegrenzungsplatten (12, 19, 20) auswechselbar an den Schließzylindern (8, 17, 18) befestigt sind.

4. Gußmaschine nach Anspruch 3, dadurch gekennzeichnet, daß in den Formraumbegrenzungsplatten (12, 19, 20) Anspritzkanäle ausgebildet sind.
